# EUROPEAN PATENT APPLICATION

(11) **EP 0 920 100 A2**
(43) Date of publication of application: **02.06.1999**
(21) Application number: 98308963.2
(22) Date of filing: 02.11.1998
(51) Int. Cl.: H02G 3/26, H02G 3/04

(54) **Bracket for lay-on cables within partition wall**

(30) Priority: 03.11.1997 MY 9705195
(71) Applicant: Artwright Technology SDN BHD, 47100 Puchong, Selangor (MY)
(72) Inventor: Yong, Yoke Keong, 47100 Puchong, Selangor (MY)
(74) Representative: Howe, Steven

(57) **Abstract**

A bracket for the ease of laying-on of cables within a partition wall wherein the bracket is comprised of a base member for mounting onto the partition wall's frame and for providing a means to support cables laid onto said bracket. The base member's back portion is provided with partition wall mounting means, such as hooks, for mounting said bracket onto a partition wall frame. The base member's front portion is provided for laying onto and supporting the cables that have been laid onto the bracket. A hinge portion is provided at one end of the base member to provide for pivotal movement with the base member. Preferred embodiments provide for either a separate member or integrally fabricated member which is pivotally connected to the base member at the hinge portion. Such separate or integral member may be adapted to engage a partition panel cover or as a bracket cover member.

## Description

This invention relates to the laying-on of utility wires and cables behind the panels of the partition wall system.

Modular partition walls are increasingly being used in the office environment because of their flexibility in reorganisation and reconfiguration within an open office space. As each room or cubicle formed by the partition wall requires utility lines such as electrical power cables, telephone wires and computer networking data lines (hereinafter collectively referred to as "cables"), these cables have to be laid within the partition walls both for safety and aesthetic reasons.

Partition wall systems typically comprise a partition wall frame, removable panels and/or panel covers. The conventional method of laying the cables is to obtain the length of each cable required by laying the cables alongside the partition walls from the utility common source to the outlet in the partition. The cables are then cut to length and the ends thereof are inserted to "snake" laboriously through openings in the partition wall frame for the entire length of cables. Panels are then installed to cover the cables now running within the wall frames.

When the office layout is changed and the partition wall dismantled for reconfiguration, the cables have to be pulled out from the partition wall frame beforehand and after the reconfiguration, the cables will have to be laid by inserting them through the holes of the partition wall frame.

Necessarily, the cables are pulled through the openings, around the corners of the partition, etc wherein there arises the danger of scratching the insulating sheath or layers of the cables thus exposing the wires within. Thus, the end-to-end laying of cables may be hazardous in the event an electrical power cable is damaged by the pulling method or loss of signal in the case of telephone and computer data lines.

The present invention provides a bracket for supporting lay-on cables within a partition wall, the bracket including a base member having a back portion and a front portion, the back portion being provided with partition wall mounting means for mounting the bracket onto a frame of the partition wall, the front portion being provided with one or more cable support means for supporting the cables laid onto the bracket, at least one end of the base member being provided with a hinge portion for providing a pivotal support thereon.

The present invention, therefore, attempts to alleviate the problems referred to previously by providing brackets for laying of the cables which avoids the need to rely on the end-to-end laying of the cables within the partition wall frame. The brackets hereinafter described and claimed allow for the transverse laying on of the cables at the partition panel plane rather than the partition frame. For example, the cables may be transversely and directly laid onto the brackets without the need for pulling the cables through. Thus, the task of laying the cables is easier and is less damaging.

Preferably, the partition wall mounting means provided on the back portion of the base member may comprise of one or more projections arising from said back portion, each of said projections being fabricated to hook onto a corresponding hole on the partition wall frame. The hook means may comprise of at least one or a combination of (i) an outline hook frame made of resilient polymeric material and (ii) a solid hook, which are fabricated integrally with the base member.

Preferably, the cable support means are formed integrally with the base member in the form of at least a rib extending from the base member's front portion. The rib may extend to form a substantially encasing support means for holding at least one cable running laterally through the bracket. The rib may further be provided with a weakened spot to increase the pliability of a frontal rib section of the cable support means to enable said rib section to be plied opened to ease the laying of cables into the cable support means. The weakened spot may be fabricated as a snap-hinge wherein the frontal rib section may snap-close or stays opened due to the snap action of the snap hinge.

A preferred embodiment is to have each of the cable support means formed by the rib(s) provided with at least an opening for laying-on of cables into said cable support means. The opening may be formed by the ribs' ends extending to enclose and define an enclosure but wherein the opposing rib ends stop short of meeting one another to allow a gap thereinbetween as the opening to enable a cable to be laid into the enclosure by pushing said cable therethrough. The opposing rib ends may be tapered to be pliant and extend inwardly so that the gap is marginally narrower than the cable's diameter, whereby enabling a transversing cable to be pushed through said gap to distend the opposing pliant rib ends into the said enclosure.

In another preferred embodiment, the bracket's plurality of cable support means is provided to group different transversing cables laid onto the bracket for utility organisational purposes. Preferably still, the ribs are fabricated into a vertical series of cable support means each for one transversing cable.

In yet another embodiment, the hinge portion of the bracket may comprise of a weakened spot to enable the pliability of the bracket's frontal section from the base member. The weakened spot may be fabricated as a snap-hinge.

Preferably, the hinge portion may comprised of a joint between any one of (i) a pivotal part and (ii) a stationary part, one of the two parts being integral with the base member and the other part to another member.

In yet another embodiment, the pivotal part and the stationary part of the hinge portion may be joined by a hinge pin transfixing through said pivotal part and stationary part, and wherein the other part is the corresponding edge of the panel cover's flange. The hinge body of the hinge portion may be integral with the base member and may be fitted in between a pair of hinge pin end holders formed by the folding of the edge of the panel cover's flange, the hinge is formed when the hinge pin transfixes said pair of pin holders with said hinge body in between. The pivotal part of the hinge portion may be integral with the base member and may be provided as a pair of pin end holders in between the hinge body of the hinge portion which may be formed by the folding of the edge of the panel cover's flange, the hinge thus formed when the hinge pin transfixes said pair of pin holders with said stationary part in between. In another embodiment, the hinge portion may be comprised of a pawl-and-ratchet means so that the pivotal part may be pivotally lifted to stay in an opened position, and a ratchet release means so that the pivotal part may be pivotally folded back to a closed position.

In one embodiment, the pivotal part and the stationary part of the hinge portion are alternatively provided as a pivotal guide pin and a semi-circular pivotal groove wherein said guide pin may slideably move, said pivot groove defines the pivotal movement allowable for the panel cover and wherein said one of either guide pin or groove is provided on the pivotal part and the other on the stationary part of said hinge portion. Preferably, the pivotal groove is provided with an opening which has ends that are resilient and terminates in a ridge that narrows the opening so that when the guide pin slides out of the groove into the opening and rests on the ridge, some force is required to push said pin to overcome the ridge to slide into the groove again.

Preferably, the hinge portion at the proximal end of the base member provides for a pivotal connection between the base member and a removable partition panel cover, said base member is provided with a panel cover engagement means at the distal end for engaging the partition panel cover.

In one embodiment of the bracket, the base member's length spans the width of the partition panel cover so that the panel cover engagement means at the distal end of the base member may snugly engage the corresponding inner surface of the panel cover's flange. Preferably, the panel engagement means' distal end surface and the inner surface of panel cover's flange are engageable by tongue-and-groove means.

In another embodiment, the bracket is provided with another member as a panel cover attachment member for attaching to a removable partition panel cover, and wherein the hinge portion provides the pivot between the base member and said panel cover attachment member. The panel cover attachment member may comprise of an arm portion which transcends the breath of the inner width of the removal partition panel cover so that said attachment member fits in securely between the flanged edges of the panel cover's inner side. Preferably, at least one of the two ends of the arm portion is provided with a flange extension to engage the inner surface of the corresponding panel cover's flange edge, said flange extension's engagement surface and the corresponding engagement surface of the flange edge is provided with a tongue-in-groove means.

In another embodiment of the bracket, the hinge portion at one end of the base member provides for a pivotal movement of a bracket cover member which extends to cover the height of the partition panel cover. Preferably, the bracket cover member is fabricated integrally with the base member and the hinge portion is fabricated as a weakened spot.

As a specific embodiment, the bracket cover member may be pivotably hinged at the proximal end of the base member at the hinge portion, pivotably moved to cover over the cable support means and securely engageable to a complementary part of a securing means at the distal end of the base member via any one of the following securing means - complementary hook means, tongue-and-groove means, or magnetic means.

As another specific embodiment, a bracket employing one or more of the foregoing features may be used in the space in between two adjacent partition panel covers. Generally, a partition wall system comprising wall frame, detachable panels and panel covers may be adapted to accommodate and install one or more embodiments of the bracket.

The brackets for lay-on cables within a partition wall of the present invention will now be described in fuller detail with references to the following drawings as specific examples or illustrations which are not to be construed as delimiting the scope of the invention and the variety of other embodiments the invention is capable of.
- Figure 1: compares the conventional laying of cables via the partition wall frame with the invention's transversely laid-on cables onto the brackets at the panel plane.
- Figures 2A & 2B: show the basic configuration of the bracket of the invention; Fig. 2A shows the front portion while Fig. 2B shows the back portion.
- Figure 3: shows one embodiment of the bracket wherein one cable support means for each cable is provided.
- Figure 4: shows one embodiment of the bracket wherein the hinge portion is provided as a weakened spot and a bracket cover member is further provided.
- Figure 5: shows one embodiment of the hinge portion of the bracket.
- Figure 6: shows another embodiment of the hinge portion of the bracket.

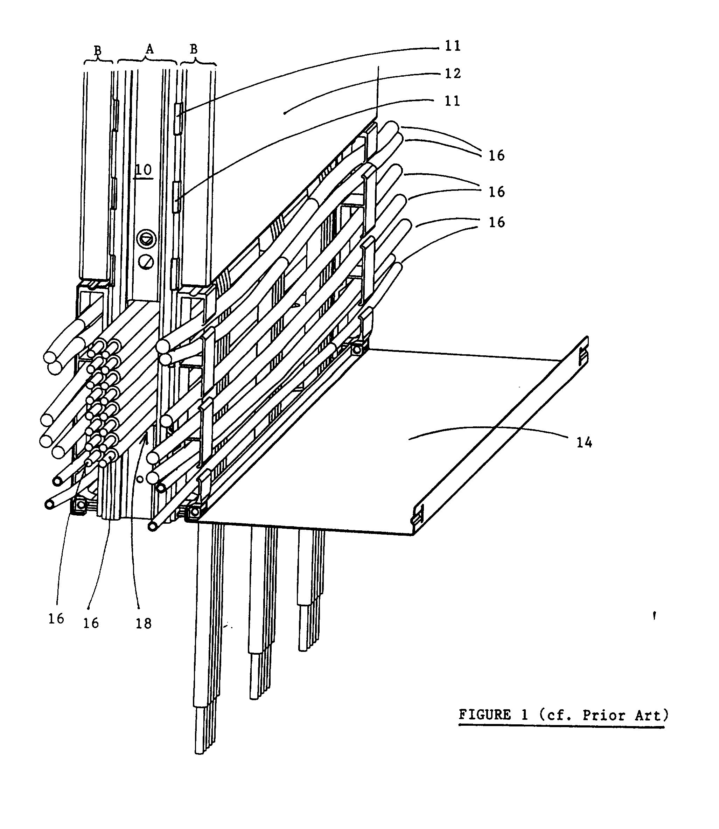

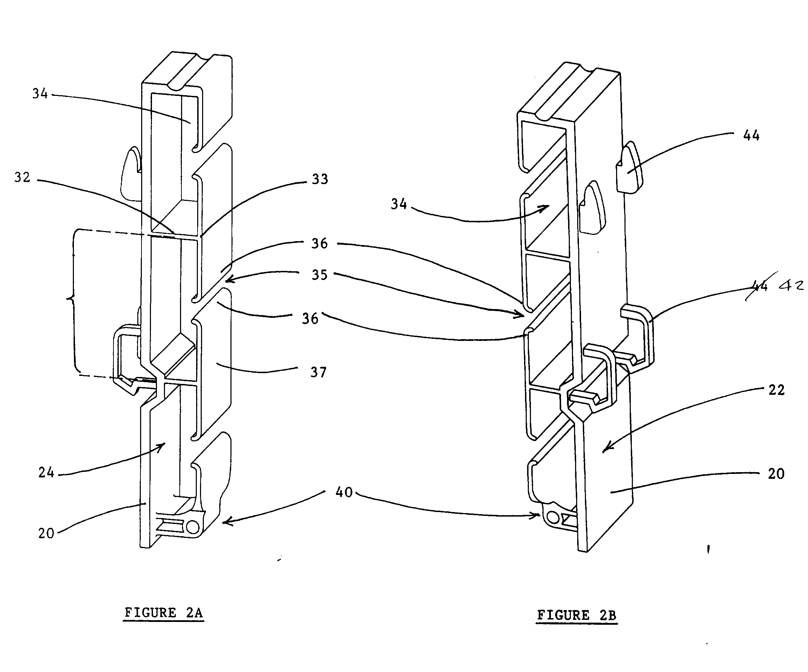

The bracket of the present invention eases the laying of cables within a partition wall, specifically the laying of cables at the partition panel plane (B) as comparatively shown in Figure 1. In this Figure, cables (16) laid in a conventional manner through the frame (10) are shown, as well as cables (16) laid using brackets according to the present invention. As shown in Figure 2, the basic configuration of the bracket comprises a base member (20) which principally serves as a base for providing means for mounting the bracket onto the partition wall's frame and for providing a means to support cables that have been laid onto said bracket.

A typical partition wall frame (10) comprises a frame of horizontal and vertical members joined to one another to form a modular partition wall frame. For horizontal connection modularity, the vertical members at the edge of each frame are normally provided with holes (11), as shown in Fig. 1, which are provided equidistant along the edge. These holes (11) may be used for connection via the partition wall system's accessory parts to join with another wall frame, or used for mounting partition panels.

The base member (20) of the bracket of the invention, as shown in Fig. 2B, is characterised in that its back portion (22) is provided with partition wall mounting means for mounting said bracket onto a partition wall frame using the holes (11) in the same manner as the conventional accessory parts of the partition wall frame. The front portion (24) of base member is provided with one or more cable support means (30) for laying onto and supporting the cables (16) (not shown) that have been laid onto the bracket. Further, a hinge portion (40) is provided at at least one end of the base member to provide for pivotal movement with the base member (20). The hinge portion serves as a pivotal point for a pivotal movement of either (i) an integral part of the bracket, (ii) a separate member of the bracket, or (iii) a separate member such as the removable panel or panel cover.

In one embodiment of the invention, the bracket is provided with partition wall mounting means provided on the back portion (22) of the base member (20). The mounting means may be comprised of one or more projections arising from said back portion (22) wherein each of the said projections is fabricated in such a manner so as to hook onto a corresponding hole (11) on the partition wall frame (10). It will be apparent that the position of each of these projections matches the position of the holes (11) on the wall frame (10) so that the bracket may be mounted thereonto.

In one preferred embodiment of the present invention, the projection making up the hook means comprises of at least one or more in combination of (i) a resilient outline hook frame (42) and (ii) a solid hook (44), which are fabricated of resilient polymeric material integrally with the base member (20). The outline hook frame (42), due to its thin frame outline made of resilient polymeric material, is resiliently deformable and may be forced into a corresponding hole (11) on the partition wall frame (10). The solid hook (44), due to its solid configuration, is stronger and less deformable.

As shown in Fig. 2A and 2B, both these two examples of the hook means (42,44) may be complementarily used to mount the bracket onto the partition wall frame's holes (11). The upper hook (44), being the solid one, may be first inserted into the corresponding upper hole (not shown) on the wall frame (10) and, therefore, the lower hook (42), being the deformable resilient outline frame of a hook, may be inserted to snap into the corresponding lower hole (not shown), thus securely mounting the bracket onto the wall frame (10). To dismount, the same lower, deformable and resilient hook may be pulled out of the hole first before the upper solid hook (44) may be disengaged from the hole.

It would be obvious that other types of hook means or combinations of these hook means would be equally effective in mounting the bracket onto a partition wall frame.

In a preferred embodiment of the invention, the bracket's cable support means (30) are formed integrally with the base member (20) in the form of at least a rib (32) extending from the base member's front portion (24), said rib (32) extending to form a substantially encasing support means for holding at least one cable (16) running laterally and transversely through the bracket.

There are various configuration of the rib to enable the cable support means to provide the necessary means to support and/or substantially encase the cable running transversely through the bracket. As shown in Fig. 2A and Fig 2B, the ribs (32) may extend to form T-branches (33) which in complement with the adjoining ribs (32) may form a suitable enclosure (34) in an encasing manner for the cable (16). It is preferred that each of the cable support means (30) so formed by the ribs (32, 33) is provided with at least an opening (35) for the ease of laying-on of cables (16) into said cable support means (30) or enclosures.

The opening (35) may be formed by the rib ends (36) extending to enclose and define the enclosure (34) and wherein the opposing rib ends (36) stop short of meeting one another to allow a gap thereinbetween as the opening (35) to enable a cable to be laid into the enclosure by pushing said cable (16) therethrough. Preferably, the opposing rib ends (36) are tapered and thinned so that their flexibility and pliability increase with their ends tapered inwardly so that the gap is marginally narrower than the intended cable's diameter. In this manner, a transversing cable (16) may be pushed through said gap or opening (35) to distend said opposing pliant rib ends (36) into the said enclosure (34).

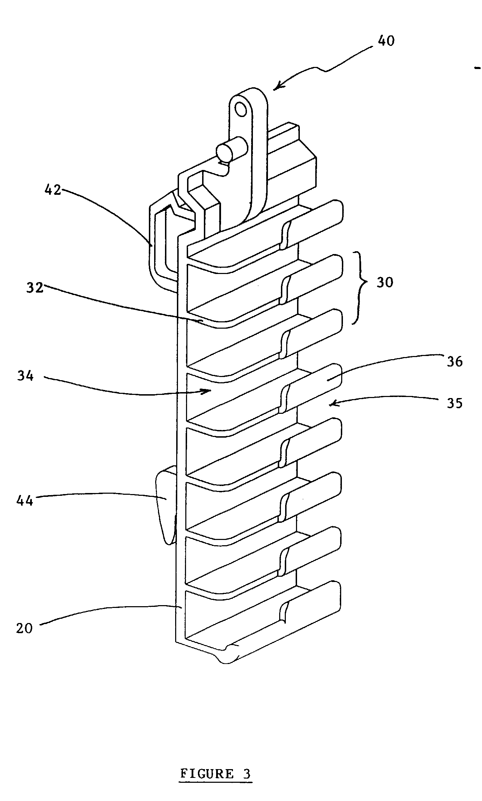

In one preferred embodiment of the bracket, a plurality of the cable support means (30) may be provided to organise or group different types of transversing cables or wires laid onto the bracket for utility organisational purposes. For example, electrical power cables, computer networking cables and telephone wire lines may each be laid onto a support means (30) of the same respective positions in all the brackets installed in a partition wall system so as to minimise crossing of cables of different utility as they are laid within the partition wall system. In another preferred embodiment of the bracket, the ribs (32) may be fabricated into a vertical series of cable support means (30) so that each support means (33) may cater for one transversing cable as shown in Figure 3.

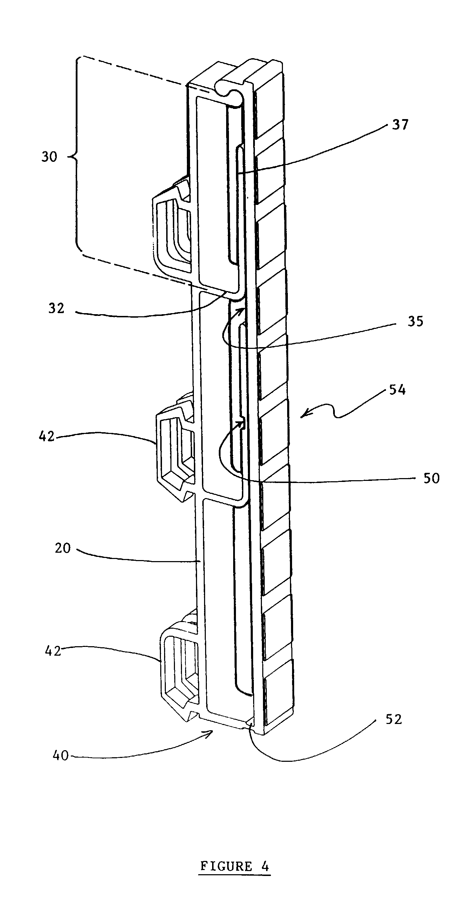

In a preferred embodiment of the invention, as shown in Figure 4, the cable support means as defined by the ribs (32) is provided with at least one weakened spot (50) to increase the pliability of a frontal rib section (37) of the cable support means (30) to enable said rib section to be plied open to ease the laying of cables into said cable support means.

Preferably still, the weakened spot (50) is fabricated as a snap-hinge wherein the frontal rib section (37) is respectively snap-closed or stays opened due to the snap action of the snap hinge. Such snap-action hinge design for a planar hinge may be easily adapted from any of the conventional snap hinges as disclosed in European patent EP-0,056,469, German patent DE-1,808,875, Swiss patent CH-488,085, French patent FR-1,595,023 and U.S. patents US-3,135,458 and US-3,616,487. Some of these patents, for example, EP-0,056,469, are for use in hinging a cylindrical bottle cap body with the cap lid or cover but may be easily adapted by a person skilled in the art for hinging between two planar members as in the present bracket.

In a manner similar to the frontal rib section (37), the hinge portion (40) of the bracket may be provided as a weakened spot (52) as shown in Figure 4. Such a weakened spot (52) may enable the bracket's frontal section to be pliable to ease the pivotal distention of the other member (such as a bracket cover member (54) as shown in Figure 4) from the base member (20). As in the case of the frontal rib section (37), the weakened spot may be fabricated as a snap-hinge as modified from the prior art described above.

The provision of a hinge portion is essentially to provide for a pivotal movement between two parts or members. In the present invention, the hinge portion (40) of the bracket provides for similar pivotal movement between two parts or members of the brackets joined to one another at the hinge portion (40), i.e. between any one of (i) a pivotal part and (ii) a stationary part. One of the parts may be integral with the base member (20) and the other part being or connected to another member. This other member may be a bracket cover member (54), a corresponding edge of the partition panel cover's (14) flange or like member or part.

Due to the bracket's function as a bracket for cables and wires, it would be advantageous that the base member (20) forms the stationary part while the other member is provided to join to the base member (20) at the hinge portion (40) as the pivotal part or member. Preferably, the hinge portion (40) may comprise of a joint between any one of (i) a pivotal part and (ii) a stationary part, one of the two parts being integral with the base member and the other part to another member.

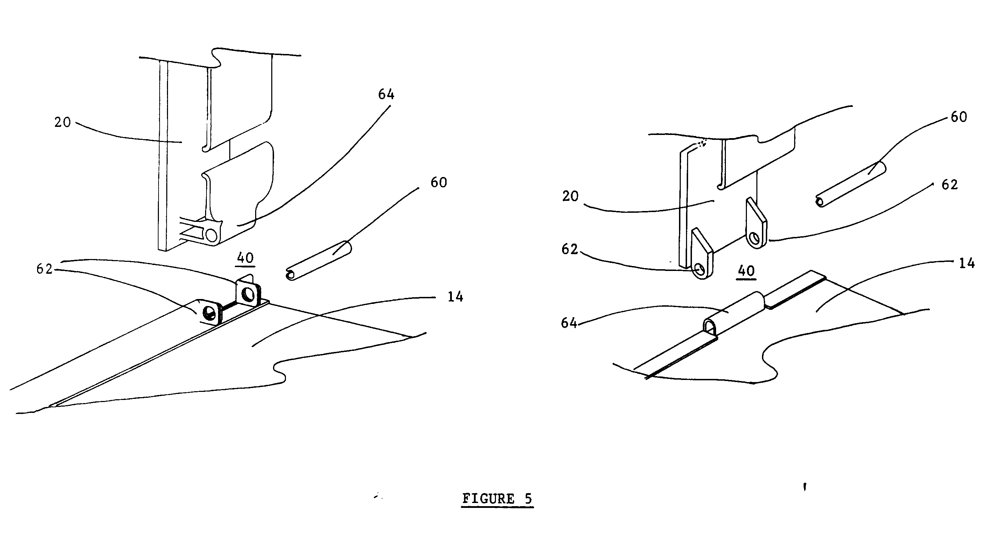

As a specific embodiment shown in Figure 5, the hinge portion (40) may provide for the hinge joining between the bracket unit and a partition panel cover (14) whereby the pivotal part and the stationary part of the hinge portion (40) may be joined by a hinge pin (60) transfixing through said pivotal part and stationary part. The stationary part may be advantageously provided on the base member since the bracket should remain stationary in carrying the cables and wires within a partition wall panel. Accordingly, the pivotal part may be provided as or connected to the panel cover (14), preferably to a corresponding edge of the panel cover's (14) flange.

Preferably still, the hinge body (64) of the hinge portion (40) may be integral with the base member (20) and is fitted in between a pair of hinge pin end holders (62) formed by the folding of the edge of the panel cover's (14) flange, the hinge is formed when the hinge pin (60) transfixes said pair of pin holders (62) with said hinge body in between. It is apparent that the reverse is also possible, i.e. the base member is provided with a pair of pin end holders (62) in between the hinge body part of the hinge portion (40) which is formed by the folding of the edge of the panel cover's (14) flange so that the hinge is formed when the hinge pin (60) transfixes said pair of pin holders (62) with said hinge body (64) in between.

Apart from such hinge pin embodiment, it is apparent that other conventional means of hinging are possible such as a pawl-and-ratchet means so that the panel may be pivotally lifted to stay in an opened position, and a ratchet release means may be provided so that the pivotal part may be pivotally folded back to a closed position.

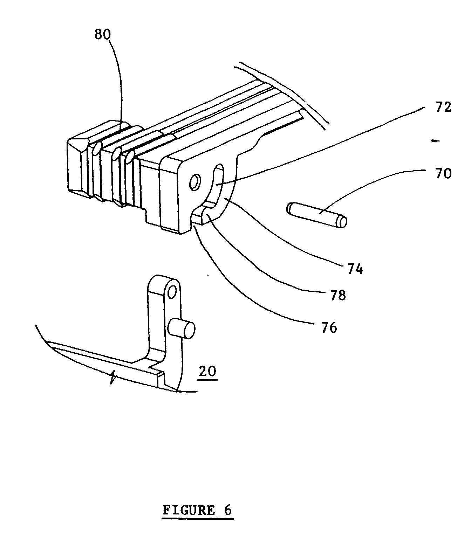

In another alternative embodiment of the bracket's hinge portion (40), as shown in Figure 6, the pivotal part and the stationary part may be provided as a pivotal guide pin (70) and a semi-circular pivotal groove (12) whereinbetween said guide pin may slideably move. As shown in Fig. 6, the pivotal guide pin (70) is provided integral with the stationary part of the hinge which is provided on the bracket unit while the pivotal groove is provided on the pivotal part of the hinge. As in case of Figure 5, the reverse is also possible, i.e. the pivotal pin is provided on the pivotal part of the hinge and the pivotal groove is provided on the stationary part of the hinge which is integral with the bracket.

The said pivotal groove defines the pivotal movement freedom allowable for the panel cover and, preferably, the pivotal groove is formed by a semi-enclosing rib (74) which terminates with an opening (76) at one end of rib (78). The rib end (78) is preferably resilient and terminates in a ridge that narrows the opening so that when the panel cover is lifted to open, the guide pin slides and snaps out of the groove into the opening and may rest on the ridge. Thus, if the stationary part of the hinge is connected to a panel cover or connected to a member which engages the panel cover, the panel cover may remain in the opened or lifted position and so that some force is required to push said pin to overcome the ridge to slide into the groove again to allow the panel cover to be folded back to the closed position.

In one preferred embodiment, the hinge portion (40) at the proximal end of the base member (20) provides for a pivotal connection between the base member (20) and a removable partition panel cover (14). The base member (20) may be provided with a panel cover engagement means (80) at the distal end for engaging the partition panel cover (14).

In one specific embodiment, the base member's (20) length spans the width of the partition panel cover (14) so that the panel cover engagement means at the distal end of the base member (20) may snugly engage the corresponding inner surface of the panel cover's (14) flange. Many means of engaging the panel cover's flange are possible, for example, the panel engagement means' distal end surface and the inner surface of panel cover's flange are engageable by tongue-and-groove means, i.e. the tongue part may be provided on either the flange of the panel cover and the groove on the distal end of the base member or vice versa.

In another specific embodiment, the bracket may be provided with another member in the form of a panel cover attachment member (80) for attaching to a removable partition panel cover. In this embodiment, the hinge portion provides the pivot between the base member and said panel cover attachment member. Preferably, the panel cover attachment member (80) comprises of an arm portion which transcends the breath of the inner width of the removable partition panel cover (14) so that said attachment member fits in securely between the flanged edges of the panel cover's inner side. Preferably still, at least one of two ends of the arm portion is provided with an flange extension to engage the inner surface of the corresponding panel cover's flange edge. The flange extension's engagement surface and the corresponding engagement surface of the flange edge may be provided with a tongue-in-groove means.

In yet another embodiment of the bracket, the hinge portion at one end of the base member may provide for pivotal movement between the base member and a bracket cover member (54) as in Fig. 4. Preferably, when the bracket member is used in the space between two panels, the bracket cover member extends to cover the height of the partition panel cover and may be further provided with patterns, designs or fabric on the outside surface so as to provide the inter-panel space with aesthetically continuity with pattern, design or fabric of the panel cover.

Preferably still, the bracket cover member is pivotably hinged at proximal end of the base member at the hinge portion and may be pivotably moved to cover over the cable support means. For the cover member to securely cover the cable support means, means may be provided to engage the distal end of the cover member to a complementary part of the distal end of the base member. The engagement means may be adapted from any one of the following securing means - complementary hook means (as shown in Fig. 4), tongue-and-groove means, or magnetic means.

The bracket unit of this invention is envisaged to be moulded from a suitable polymeric material which offers suitable resilience and pliability according to different parts or members of the bracket. From the above description on the general features and working principles of the invention and the specific embodiments thereof, it would be obvious to a person skilled in the art that there are many variations and alternative embodiments that may be used in substitution of the steps or processes of the present invention's method, and many of the various parts, components or alternative embodiments not specifically described herein may be used in substitution of the corresponding elements of the method and apparatus of the present invention.

For instance, there are many variation of the methods that may be used to attach the bracket to the partition wall frame and such methods may be equally applicable in the present invention. It would be apparent to a person skilled in the art that the use of the bracket need not be restricted to a partition wall system and may be adapted for used in other wall or furniture systems wherein a frame and cover panels are involved. The bracket described herein, too, has many possibilities of alternate parts or materials that may be used as substitutes to effectively employ the features and working principles thereof.

## Claims

1. A bracket for supporting lay-on cables (16) within a partition wall, the bracket including a base member (20) having a back portion (22) and a front portion (24), the back portion (22) being provided with partition wall mounting means (40,42,44) for mounting the bracket onto a frame (10) of the partition wall, the front portion (24) being provided with one or more cable support means (32-37) for supporting the cables laid onto the bracket, at least one end of the base member (20) being provided with a hinge portion (40) for providing a pivotal support thereon.

2. A bracket according to Claim 1, wherein the partition wall mounting means (40,42,44) provided on the back portion (22) of the base member (24) is comprised of one or more projections (42,44) arising from the back portion (22) the or each projection (42,44) being fabricated to hook onto a corresponding hole (11) on the partition wall frame (10).

3. A bracket according to Claim 2, wherein the mounting means (40) comprises at least one or more in combination of (i) an outline hook frame (42) made of resilient polymeric material and (ii) a solid hook (44) fabricated integrally with the base member (22).

4. A bracket according to any one of the preceding claims, wherein the cable support means (32-37) are formed integrally with the base member (20) in the form of at least a rib (32) extending from the base member's front portion (24), the rib (32) extending to form a substantially encasing support means for holding at least one cable (16) running laterally through the bracket.

5. A bracket according to Claim 4, wherein the rib (32) is provided with a weakened spot (50) to increase the pliability of a frontal rib section (37) of the cable support means to enable the rib section (37) to be plied open to ease the laying of cables (16) into the cable support means.

6. A bracket according to Claim 4 or 5, wherein each of the cable support means formed by the rib(s) (32) is provided with at least an opening (35) for laying-on of cables (16) into the cable support means.

7. A bracket according to Claim 6, wherein the cable support means with an opening (35) is formed by rib ends extending to enclose and define an enclosure but wherein the opposing rib ends stop short of meeting one another to allow a gap (35) therebetween as the opening to enable a cable (16) to be laid into the enclosure by pushing the cable (16) therethrough.

8. A bracket according to Claim 7, wherein the opposing rib ends are tapered to be pliant and extend inwardly so that the gap (35) is marginally narrower than the cable's diameter, whereby enabling a transversing cable (16) to be pushed through the gap (35) to distend the opposing pliant rib ends into the enclosure.

9. A bracket according to any one of Claims 4 to 8, wherein a plurality of the cable support means are provided to group different transversing cables (16) laid onto the bracket for utility organisational purposes.

10. A bracket according to any one of Claims 4 to 9, wherein the ribs (32) are fabricated into a vertical series of cable support means each for one transversing cable (16).

11. A bracket according to Claim 5, wherein the weakened spot (50) is fabricated as a snap-hinge, wherein the frontal rib section (36) is respectively snap-closed or stays opened due to the snap action of the snap hinge.

12. A bracket according to any one of the preceding claims, wherein the hinge portion (40) comprises of a weakened spot (50) to enable the pliability of the bracket's frontal section from the base member (20).

13. A bracket according to Claim 12, wherein the weakened spot (52) is fabricated as a snap-hinge.

14. A bracket according to any one of Claims 1 to 11, wherein the hinge portion (40) is comprised of a joint between any one of (i) a pivotal part and (ii) a stationary part, one of the two parts being integral with the base member and the other part to another member.

15. A bracket according to Claim 14, wherein the pivotal part and the stationary part of the hinge portion (40) are joined by a hinge pin (60) transfixing through the pivotal part and stationary part, and wherein the other part is the corresponding edge of the panel cover's flange.

16. A bracket according to Claim 15, wherein the stationary part of the hinge portion (40) is integral with the base member (20) and is fitted in between a pair of hinge pin end holders (62) formed by the folding of the edge of the panel cover's flange (14), the hinge (40) is formed when the hinge pin (60) transfixed the pair of pin holders (62) with the stationary part in between.

17. A bracket according to Claim 15, wherein the pivotal part of the hinge portion (40) is integral with the base member (20) and is provided as a pair of pin end holders (62) in between the stationary part of the hinge portion which is formed by the folding of the edge of the panel cover's flange (14), the hinge (40) is formed when the hinge pin (60) transfixes the pair of pin holders (62) with the stationary part in between.

18. A bracket according to any one of Claims 14 to 17, wherein the hinge portion (40) is comprised of a pawl-and-ratchet means so that the panel may be pivotally lifted to stay in an opened position, and a ratchet release means so that the pivotal part may be pivotally folded back to a closed position.

19. A bracket according to Claim 14, wherein the pivotal part and the stationary part of the hinge portion is alternatively provided as a pivotal guide pin and a semi-circular pivotal groove (72) in which the guide pin may slidably move, the pivot groove (72) defines the pivotal movement allowable for the panel cover and wherein one of the guide pin and the groove (72) is provided on the pivotal part and the other on the stationary part of the hinge portion (40).

20. A bracket according to Claim 19, wherein the pivotal groove (72) is provided with an opening (76) which has ends that are resilient and terminates in a ridge that narrows the opening so that when the guide pin slides out of the groove into the opening and rests on the ridge, some force is required to push the pin to overcome the ridge to slide into the groove (72) again.

21. A bracket according to any one of the preceding claims, wherein the hinge portion (40) at the proximal end of the base member (20) provides for a pivotal connection between the base member (20) and a removable partition panel cover (14), the base member (20) being provided with a panel cover engagement means at the distal end for engaging the partition panel cover.

22. A bracket according to Claim 21, wherein the base member's length spans the width of the partition panel cover (14) so that the panel cover engagement means at the distal end of the base member (20) may snugly engage the corresponding inner surface of the panel cover's flange.

23. A bracket according to Claim 21 or 22, wherein the panel engagement means' distal end surface and the inner surface of panel cover's flange are engageable by tongue-and-groove means.

24. A bracket according to Claim 14, wherein the bracket's other member is provided as a panel cover attachment member for attaching to a removable partition panel cover, and wherein the hinge portion (40) provides the pivot between the base member (20) and the panel cover attachment member.

25. A bracket according to Claim 24, wherein the panel cover attachment member comprises an arm portion which transcends the breadth of the inner width of the removal partition panel cover so that the attachment member fits in securely between the flanged edges of the panel cover's inner side.

26. A bracket according to Claim 25, wherein at least one of two ends of the arm portion is provided with a flange extension to engage the inner surface of the corresponding panel cover's flange edge, the flange extension's engagement surface and the corresponding engagement surface of the flange edge is provided with a tongue-in-groove means.

27. A bracket according to any one of Claims 1 to 20, wherein the hinge portion (40) at one end of the base member (20) provides for pivotal movement of a bracket cover member which extends to cover the height of the partition panel cover.

28. A bracket according to Claim 27, wherein bracket cover member is fabricated integrally with the base member (20) and this hinge portion (40) is fabricated as a weakened spot (52).

29. A bracket according to Claim 27 or 28, wherein the bracket cover member is pivotably hinged at proximal end of the base member (20) at the hinge portion (40), pivotably moved to cover over the cable support means and securely engageable to a complementary part of a securing means at the distal end of the base member (20) via any one of the following securing means - complementary hook means, tongue-and-groove means, or magnetic means.

30. A bracket according to any one of Claims 27 to 29, wherein the bracket is used in the space in between two adjacent partition panel covers.

31. A partition wall system comprising wall frame, detachable panels and panel covers which has been adapted to accommodate and install one or more brackets according to any of the foregoing claims.
